# EUROPÄISCHE PATENTSCHRIFT

(11) **EP 3 385 934 B1**
(45) Veröffentlichungstag und Bekanntmachung des Hinweises auf die Patenterteilung: **03.01.2024**
(21) Anmeldenummer: 18161815.8
(22) Anmeldetag: 14.03.2018
(51) Int. Cl.: G08G 1/16, B60T 8/88

(54) **VORRICHTUNG FÜR DIE STEUERUNG EINES SICHERHEITSRELEVANTEN VORGANGES, VERFAHREN ZUM TESTEN DER FUNKTIONSFÄHIGKEIT DER VORRICHTUNG, SOWIE KRAFTFAHRZEUG MIT DER VORRICHTUNG**
DEVICE FOR CONTROLLING A SAFETY-RELEVANT PROCESS, METHOD FOR TESTING THE FUNCTIONALITY OF THE DEVICE, AND MOTOR VEHICLE USING THE DEVICE
DISPOSITIF DE COMMANDE D'UN PROCESSUS RELATIF À LA SÉCURITÉ, PROCÉDÉ D'ESSAI DE LA CAPACITÉ DE FONCTIONNEMENT DUDIT DISPOSITIF AINSI QUE VÉHICULE DOTÉ DUDIT DISPOSITIF

(30) Priorität: 07.04.2017 DE 102017206035; 08.06.2017 DE 102017209721
(43) Veröffentlichungstag der Anmeldung: 10.10.2018
(73) Patentinhaber: VOLKSWAGEN AKTIENGESELLSCHAFT, 38440 Wolfsburg (DE); ZF Active Safety GmbH, 56070 Koblenz (DE)
(72) Erfinder: Tschiene, Alexander, 38122 Braunschweig (DE); Grieser-Schmitz, Stefan, 56077 Koblenz (DE)
(74) Vertreter: Patentanwälte Bressel und Partner mbB

(56) Entgegenhaltungen:
- DE-A1- 10 065 118
- DE-A1- 19 743 463
- DE-A1-102014 221 901
- DE-A1-102015 110 965
- DE-A1-102015 209 565

## Beschreibung

Unter autonomem Fahren (manchmal auch automatisches Fahren, automatisiertes Fahren oder pilotiertes Fahren genannt) ist die Fortbewegung von Fahrzeugen, mobilen Robotern und fahrerlosen Transportsystemen zu verstehen, die sich weitgehend autonom verhalten.

Es gibt verschiedene Abstufungen des Begriffs autonomes Fahren. Dabei wird auf bestimmten Stufen auch dann von autonomen Fahren gesprochen, wenn noch ein Fahrer im Fahrzeug befindlich ist, der ggfs. nur noch die Überwachung des automatischen Fahrvorgangs übernimmt. In Europa haben die verschiedenen Verkehrsministerien (in Deutschland war die Bundesanstalt für Straßenwesen beteiligt) zusammengearbeitet und die folgenden Autonomiestufen definiert.
- **Level 0:** "Driver only", der Fahrer fährt selbst, lenkt, gibt Gas, bremst etc.
- **Level 1:** Bestimmte Assistenzsysteme helfen bei der Fahrzeugbedienung (u.a. ein Abstandsregelsystem - Automatic Cruise Control ACC).
- **Level 2:** Teilautomatisierung. U.a. automatisches Einparken, Spurhaltefunktion, allgemeine Längsführung, beschleunigen, abbremsen etc. werden von den Assistenzsystemen übernommen (u.a. Stauassistent).
- **Level 3:** Hochautomatisierung. Der Fahrer muss das System nicht dauernd überwachen. Das Fahrzeug führt selbstständig Funktionen wie das Auslösen des Blinkers, Spurwechsel und Spurhalten durch. Der Fahrer kann sich anderen Dingen zuwenden, wird aber bei Bedarf innerhalb einer Vorwarnzeit vom System aufgefordert die Führung zu übernehmen. Diese Form der Autonomie ist auf Autobahnen technisch machbar. Der Gesetzgeber arbeitet darauf hin, Level 3-Fahrzeuge zuzulassen. Die gesetzlichen Rahmenbedingungen wurden dafür bereits geschaffen.
- **Level 4:** Vollautomatisierung. Die Führung des Fahrzeugs wird dauerhaft vom System übernommen. Werden die Fahraufgaben vom System nicht mehr bewältigt, kann der Fahrer aufgefordert werden, die Führung zu übernehmen.
- **Level 5:** Kein Fahrer erforderlich. Außer dem Festlegen des Ziels und dem Starten des Systems ist kein menschliches Eingreifen erforderlich.

Automatisierte Fahrfunktionen ab Stufe 3 nehmen dem Fahrer die Verantwortung für die Steuerung des Fahrzeugs ab. Ein daran beteiligtes Brems- und Stabilisierungssystem, welches aufgrund eines Einzelfehlers ausfallen kann, braucht daher eine geeignete Rückfallebene, um das Fahrzeug immer in einem fahrdynamisch sicheren Zustand halten zu können bis der Fahrer wieder eingreifen kann. Die Bremssysteme für diese Art von Fahrzeugen, die ein Automatisiertes Fahren ab Stufe 3 bieten, werden immer redundant ausgelegt. Sie bestehen dann aus zwei Komponenten nämlich einem Primärbremssystem und einem Sekundärbremssystem, sodass eine Komponente ausfallen kann ohne die Fahrstabilität zu gefährden.

Fahrfunktionen im Geschwindigkeitsbereich ab ca. 60 km/h benötigen außer einer garantierten Verfügbarkeit der Verzögerung sicherheitshalber auch die garantierte Verfügbarkeit von Schlupfregelfunktionen, wie etwa bei dem Antiblockiersystem ABS. Diese Schlupfregelfunktionen benötigen Sensordaten als Führungsgrößen. Dazu gehört auch die Erfassung der Raddrehzahlen, wie es derzeit bei Steuergeräten zur Fahrdynamikregelung (Electronic Stability Control ESC) erfolgt. Fällt die ESC-Elektronik (Primärbremssystem) aus, stehen der Fahrfunktion und der Schlupfregelfunktion im Sekundärbremssystem keine radindividuellen Bewegungsinformationen mehr zur Verfügung, so dass eine Regelung in der Rückfallebene nicht mehr möglich ist.

Aufgrund der elektrischen Schnittstelle der Standard-Raddrehzahlsensoren ist es nicht ohne weiteres möglich, einen Sensor an zwei Steuergeräte anzuschließen um beiden Steuergeräten die benötigte Information liefern zu können. Der Sensor übermittelt seine Signale über ein Übertragungsprotokoll, welches sich definierter Strompegel bedient. Dafür wird ein VDA-Protokoll eingesetzt. Bei einer Parallelschaltung mit zwei Steuergeräten würde sich der Strom aufteilen und die Erkennung der Pegel würde u.U. in keinem der beiden Steuergeräte gelingen. Anders wäre es, wenn die einzelnen Raddrehzahlsensoren an einen Datenbus z.B. CAN-Bus (Controller Area Network) angeschlossen wären, über den die Daten an mehrere angeschlossene Steuergeräte übertragen werden könnten.

Folgende bekannte Lösungen werden erwähnt:
a) Verwendung von 4 zusätzlichen Raddrehzahlsensoren, so dass insgesamt 8 Raddrehzahlsensoren eingesetzt werden. Es wird also pro Rad und Steuergerät je ein Raddrehzahlsensor eingesetzt.
b) Verwendung von 4 redundanten Raddrehzahlsensoren. Dabei enthält das Bauteil für einen Raddrehzahlsensor 2 Sensorelemente mit separaten Ausgängen, einen für jedes angeschlossene Steuergerät. Je nachdem, von welchem Steuergerät der Bremsvorgang gesteuert wird, wird also das passende Sensorelement ausgewertet. Beide Sensorelemente sind immer gleichzeitig in Betrieb.

Aus der DE 102015110965 A1 ist eine Vorrichtung bekannt, die für ein sicheres Abbremsen eines autonom gesteuerten Fahrzeuges vorgesehen ist. Die Vorrichtung ist redundant aufgebaut. Sie enthält ein erstes Bremssteuermodul auch primäres Modul genannt und ein zweites Bremssteuermodul auch sekundäres Modul genannt. An das erste Bremssteuermodul sind in einem ersten Ausführungsbeispiel alle Raddrehzahlsensoren geschaltet. Das erste Bremssteuermodul stellt die Raddrehzahldaten der Raddrehzahlsensoren dem zweiten Bremssteuermodul über eine Datenverbindung zur Verfügung. In einem zweiten Ausführungsbeispiel sind an das erste Bremssteuermodul die Mehrzahl der Raddrehzahlsensoren geschaltet und an das zweite Bremssteuermodul nur eine Minderzahl der Radrehzahlsensoren.

Aus der DE 102015209565 A1 ist ein System bekannt, das ebenfalls für ein sicheres Abbremsen eines autonom gesteuerten Fahrzeuges vorgesehen ist. Es gibt dort ebenfalls ein Primärbremssystem wie auch ein Sekundärbremssystem. Dem Primärbremssystem ist eine erstes Steuergerät zugeordnet (z.B. ESP/ABS-Steuergerät). Auch dieses Steuergerät ist redundant aufgebaut. Es besteht aus einer ersten Steuereinrichtung und einer zweiten Steuereinrichtung, die als ASIC aufgebaut ist. Über beide Steuervorrichtungen können die Raddrehzahlsensoren mit Spannung versorgt werden. Die Raddrehzahldaten werden von der zweiten Steuereinrichtung erfasst und können über einen Fahrzeugbus (z.B. CAN-Bus) an eine externes Steuergerät weitergeleitet werden, das für das Sekundärbremssystem die Steuerung übernimmt. Selbst bei Ausfall der ersten Steuervorrichtung und des Mikrocontrollers des ersten Steuergerätes können die Raddrehzahldaten noch an das externe Steuergerät weitergeleitet werden.

Aus der EP1219489A2 ist ein System zu Steuerung und/oder Überwachung eines wenigstens zwei Steuergeräte aufweisenden Steuergeräteverbundes bekannt. Das erste Steuergerät besitzt mehrere Funktionen, nämlich die Ausführung seiner eigenen Steuerfunktion, die Überwachung seiner eigenen Steuerfunktion und die Überwachung des zweiten Steuergerätes. Stellt das erste Steuergerät eine Fehlfunktion des zweiten Steuergerätes fest, schaltet es das zweite Steuergerät ab.

Aus der DE102014221901A1 ist ein Verfahren zur Bereitstellung eines Sensorsignals in einem Bremssystem bekannt, das bei einem Ausfall des Bremsen-Steuergerätes die Signalübertragung umschaltet und das Signal an ein ESP-Steuergerät übermittelt. Eine Umschalteinheit ist dabei nur bei dem ESP-Steuergerät vorgesehen, wodurch die Sensorsignale aus dem ESP-Steuergerät wieder herausgeführt werden müssen.

Aus der DE19743463A1 ist ein redundant aufgebautes Steuergerät bekannt, mit zwei Mikroprozessoren, deren Funktion jeweils von einer eigenen Watchdog-Schaltung überwacht wird.

Die bekannten Lösungen sind mit einigen Nachteilen behaftet. Für 4 zusätzliche Raddrehzahlsensoren oder auch 4 redundante Raddrehzahlsensoren müssen doppelt so viele Leitungen im Bordnetz vorgehalten werden, als bisher. Die Kosten für die Standard-Sensoren steigen, da die doppelte Anzahl benötigt wird. Redundante Sensoren haben den Nachteil der geringen Stückzahl und es ist zu erwarten, dass die Kosten dafür noch höher sind.

Die Lösungen gemäß der erwähnten Offenlegungsschriften haben das gleiche Ziel, allerdings beschreiben Sie eine Schaltung, welche nur in einem der beiden Steuergeräte zum Einsatz kommt. Dies bringt mehrere Nachteile mit sich:
Am Steuergerät, welches die Schaltung beinhaltet, sind doppelt so viele Steckkontakte für die Raddrehzahlsensoren notwendig (z.B. 16 statt 8 Steckkontakte).

Bei Umschaltung auf das sekundäre Steuergerät bei Ausfall der Versorgungsspannung im primären Steuergerät muss u.U. ein Spannungsverlust in der Umschaltlogik in Kauf genommen werden, da zwingend ein selbstleitender MOSFET eingesetzt werden muss.

Im Rahmen der Erfindung wurde erkannt, dass die vorhandenen Lösungen die Raddrehzahlsensoren nicht effizient ausnutzen, und insoweit die Kosten für zusätzliche Raddrehzahlsensoren hoch sind.

Die Lösung des technischen Problems ergibt sich durch die Gegenstände mit den Merkmalen des Vorrichtungsanspruchs 1 und des Verfahrensanspruchs 10. Weitere vorteilhafte Weiterbildungen der Erfindung ergeben sich aus den Unteransprüchen.

Gemäß der Erfindung wird eine besondere Hardware-Architektur vorgeschlagen. Diese beinhaltet eine standardisierbare Hardware-Schnittstelle für den Anschluss von 4 Standard-Raddrehzahlsensoren an zwei Steuergeräte. Gemäß der Erfindung wird für diese Hardware-Architektur ebenfalls ein Verhaltensmodell für den Betriebsmodus vorgeschlagen, welches sicherstellt, dass auch nach Auftreten eines Einzelfehlers bei einem der beiden Steuergeräte die Daten aller Sensoren direkt von dem anderen Steuergerät empfangen werden können. Dabei werden die Daten über den Fahrzeugbus zu dem anderen Steuergerät übertragen und auch weiteren Empfängern zur Verfügung gestellt. So können in beiden Steuergeräten Rückfallebenen implementiert werden, die sich immer auf das Vorhandensein von Raddrehzahlinformationen stützen können. Weiterhin wird ein Testmodus vorgeschlagen, welcher dazu dient, die volle Funktionsfähigkeit des Systems zu prüfen. So wird sichergestellt, dass das System den Redundanzanforderungen der Fahrfunktion genügt.

Ein Vorteil der standardisierbaren Hardware-Schnittstelle besteht darin, dass die Hardware in allen Steuergeräten gleich ausgeführt sein kann.

Grundsätzlich kommen in den Steuergeräten herkömmliche Schaltungen zum Einsatz, welche die Sensorschnittstelle beinhalten. Zwischen dem IC und den Sensoren wird aber im Steuergerät noch eine Sensorik-Trennschaltung eingefügt, welche die Verbindung zwischen den Sensoren und dem defekten Steuergerät unterbrechen kann, sodass kein Strom über die Schnittstelle fließen kann. Dadurch kann ein Raddrehzahlsensor parallel an zwei Steuergeräte angeschlossen werden, weil durch die Sensorik-Trennschaltung sichergestellt ist, dass eines der beiden Steuergeräte die Schnittstelle unterbricht und sich der Sensorstrom somit nicht aufteilt.

Jedes Steuergerät muss die Trennschaltung steuern und den jeweiligen Zustand über den Fahrzeugbus kommunizieren können. Ein Ausfall eines Steuergeräts muss in jedem Fall dazu führen, dass die Schaltung die Verbindung des Steuergeräts zu den Sensoren unterbricht. Dies kann beispielsweise mit Hilfe einer bereits vorhandenen Überwachungsschaltung (Watchdog) erreicht werden. Die Watchdog-Funktion ist in den aktuellen Bremssystemen sowieso vorhanden und legt das Steuergerät still, sobald erkannt wurde, dass die Aktorik oder Elektronik nicht mehr kontrolliert werden können und somit eine Destabilisierung des Fahrzeugs droht. Ist das Steuergerät noch nicht vollständig ausgefallen, kann der Status der Schnittstelle über den Fahrzeugbus noch kommuniziert werden.

Dafür ist es vorteilhaft, wenn die Sensorik-Trennschaltung eine UND-Schaltung beinhaltet, die eine Anschaltung des wenigstens einen Sensors an das jeweilige Primär- oder Sekundär-Steuergerät bewirkt, wenn von der Überwachungsvorrichtung ein Signal kommt, mit dem signalisiert wird, dass das jeweilige Steuergerät fehlerfrei arbeitet und von einem Mikrocontroller des jeweiligen Steuergerätes signalisiert wird, dass sich das jeweilige Steuergerät in einem Zustand befindet, in dem eine Verarbeitung und/oder Weiterleitung der Signale des wenigstens einen Sensors an das jeweilige Sekundär- oder Primärsteuergerät vorgesehen ist.

Die Software der Steuergeräte muss dabei so gestaltet sein, dass sie die Schnittstelle immer nur dann aktiviert, wenn sichergestellt ist dass die Schnittstelle des anderen Steuergeräts deaktiviert ist. Dies geschieht über einen internen Zustandsautomaten, welcher die Zustände des jeweils anderen Zustandsautomaten über den Fahrzeugbus empfängt. Die Software des Primärbremssystems muss die Schnittstelle standardmäßig aktivieren und nur bei Auftreten bestimmter Fehler deaktivieren. Die Software des Sekundärbremssystems muss die Schnittstelle standardmäßig deaktivieren und unverzüglich dann aktivieren, wenn ein Fehler im Primärbremssystem dazu geführt hat, dass seine Schnittstelle deaktiviert wurde.

Erfindungsgemäß wird zusätzlich ein Testmodus vorgeschlagen, der es erlaubt, die Fähigkeit der Umschaltung der Schnittstellen zu prüfen . So wird sichergestellt, dass die benötigte Redundanz der Bremssysteme vorhanden ist, bevor eine automatisierte Fahrfunktion vom Fahrer aktiviert werden kann. Der Testmodus läuft wie folgt ab:
Das Primärsteuergerät nimmt mit Hilfe der ihm zugeordneten Sensorik-Trennschaltung eine Unterbrechung der Verbindung zu dem wenigstens einen Sensor vor. Über den Kommunikationsbus teilt es dem Sekundärsteuergerät den Eintritt in den Testmodus mit, wobei das Sekundärsteuergerät daraufhin mit Hilfe der ihm zugeordneten Sensorik-Trennschaltung eine Anschaltung des wenigstens einen Sensors an das Sekundärsteuergerät vornimmt, und die Sensordaten über den Kommunikationsbus an das Primärsteuergerät sendet. Das Primärsteuergerät überprüft den korrekten Empfang der Sensordaten und bei positivem Ergebnis der Prüfung teilt es dem Sekundärsteuergerät das Ende des Testmodus über den Kommunikationsbus mit.

Vorteilhaft ist, wenn das Sekundärsteuergerät nach Eingang der Information bzgl. des Endes des Testmodus über die ihm zugeordnete Sensorik-Trennschaltung eine Abschaltung des wenigstens einen Sensors vornimmt, woraufhin das Primärsteuergerät seinerseits aufgrund des Fehlens von übermittelten Sensordaten eine Anschaltung des wenigstens einen Sensors an das Primärsteuergerät über die ihm zugeordnete Sensorik-Trennschaltung vornimmt und wie vor Einleitung des Testmodus die Lieferung von Sensordaten an das Sekundärsteuergerät fortsetzt.

Vorteilhaft ist, wenn die Durchführung des Tests der Funktionsfähigkeit der Vorrichtung nach einer Anforderung zum Einleiten des Betriebsmodus eines hochautomatisierten Fahrens des Kraftfahrzeuges erfolgt. Dann wird der Test durchlaufen, bevor das Fahrzeug in den hochautomatisierten Fahrmodus wechselt.

Weiterhin ist es vorteilhaft für den Testmodus, wenn in dem Fall, dass das Primärsteuergerät während des Tests erkennt, dass die Sensordaten nicht korrekt von dem Sekundärsteuergerät empfangen werden können, eine Anschaltung des wenigstens einen Sensors an das Primärsteuergerät über die ihm zugeordnete Sensorik-Trennschaltung vornimmt und wie zuvor, vor Einleitung des Testmodus die Lieferung von Sensordaten an das Sekundärsteuergerät fortsetzt. Dabei ist es vorteilhaft, wenn das Primärsteuergerät den fehlerhaften Empfang der Sensordaten dem Sekundärsteuergerät mitteilt und das Sekundärsteuergerät daraufhin über die zugehörige Sensorik-Trennschaltung die Abschaltung des wenigstens einen Sensors vornimmt.

Demgemäß ist es von Vorteil, wenn in dem Fall, dass das Sekundärsteuergerät während des Tests erkennt, dass die Sensordaten nicht korrekt von dem Primärsteuergerät empfangen werden können, eine Anschaltung des wenigstens einen Sensors an das Sekundärsteuergerät über die ihm zugeordnete Sensorik-Trennschaltung vornimmt und die Lieferung von Sensordaten an das Primärsteuergerät durchführt, wobei das Sekundärsteuergerät den fehlerhaften Empfang der Sensordaten dem Primärsteuergerät mitteilt und das Primärsteuergerät daraufhin über die zugehörige Sensorik-Trennschaltung die Abschaltung des wenigstens einen Sensors vornimmt.

Die Erfindung kann in allen Fahrzeugen mit einer automatisierten Fahrfunktion ab Stufe 3 (nach VDA) eingesetzt werden, welche im höheren Geschwindigkeitsbereich arbeitet. Bei niedrigen Geschwindigkeiten (etwa unter 60 km/h) sind keine Raddrehzahlsensordaten erforderlich um das Fahrzeug stabil verzögern zu können.

Ein Ausführungsbeispiel der Erfindung ist in den Zeichnungen dargestellt und wird nachfolgend anhand der Figuren näher erläutert.

Es zeigen:
- Fig. 1: ein Kraftfahrzeug mit 4 Raddrehzahlsensoren;
- Fig. 2: eine Hardware-Architektur eines Bremssystems für das hochautomatisierte Fahren mit einem Primärsteuergerät und einem Sekundärsteuergerät; und
- Fig. 3: ein Zustandsdiagramm für das Bremssystem mit einem Testmodus.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

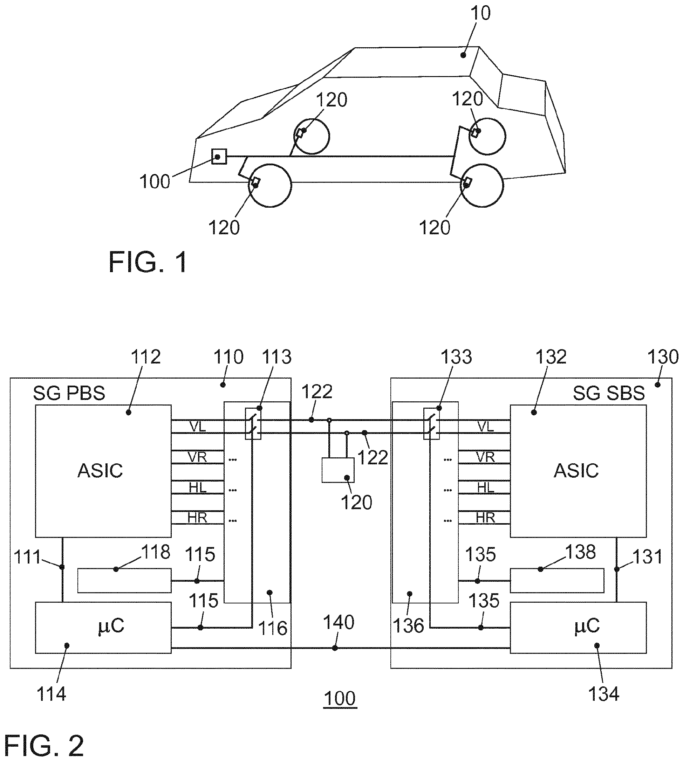

Fig. 1 zeigt ein Kraftfahrzeug. Dargestellt ist ein Personenkraftwagen Pkw. Als Fahrzeug kämen allerdings beliebige andere Fahrzeuge ebenfalls in Betracht. Beispiele von weiteren Fahrzeugen sind: Busse, Nutzfahrzeuge, insbesondere Lastkraftwagen Lkw, Landmaschinen, Baumaschinen, Motorräder, Schienenfahrzeuge, usw.. Das Fahrzeug ist mit Bezugszahl 10 versehen. Als Pkw ist das Fahrzeug mit 4 Rädern ausgestattet. Die heutigen Bremssysteme sind üblicherweise auch mit Antischlupfregelung ASR ausgestattet. Dafür ist es erforderlich die Raddrehzahlen aller 4 Rädern zu erfassen, ebenso für die Antiblockierbremsfunktion ABS. Deswegen ist es in der Zeichnung ebenfalls dargestellt, dass an jedem Rad ein Raddrehzahlsensor 120 angebracht ist. Die Raddrehzahlsensoren 120 sind mit einem Bremssteuersystem 100 verbunden. Diese Bremssteuersystem 100 besteht aus zwei unabhängig voneinander arbeitenden Steuergeräten. Für das Primärbremssystem ist beispielsweise ein ESC-Steuergerät vorhanden, welches das Primärbremssystem steuert. Dieses führt die Funktion der elektronischen Fahrstabilisierung auch Electronic Stability Control (ESC) genannt aus. Dieses ESC-Steuergerät besitzt die Fähigkeit das Fahrzeug 10 aus hoher Geschwindigkeit kontrolliert abzubremsen. Dafür ist in modernen ESC Steuergeräten auch die Funktionalität des Antiblockiersystems ABS vorhanden. Unabhängig von diesem Primärbremssystem gibt es aber noch ein Sekundärbremssystem, dass das Fahrzeug ebenfalls kontrolliert abbremsen kann. Beispielsweise ist dafür ein intelligenter Bremskraftverstärker entwickelt worden, der als elektrischer Bremskraftverstärker (eBKV) bezeichnet wird. Dessen Steuergerät bildet dann das Steuergerät des Sekundärbremssystems.

Die beiden Steuergeräte müssen nicht am selben Ort verbaut sein, wie es in Fig. 1 dargestellt ist, sie können auch an verschiedenen Orten im Kraftfahrzeug 10 eingebaut sein. Sie sind jedenfalls über den Fahrzeugbus miteinander verbunden. Als Beispiel eines Fahrzeugbusses der zur Vernetzung von Steuergeräten im Kraftfahrzeug dient, wird das Controller Area Network CAN genannt. Dieses Bussystem ist standardisiert und es wird auf die entsprechenden Spezifikationen nach dem ISO 11898 Standard für weitere Einzelheiten hingewiesen. Da für verschiedene Steuergerätekategorien unterschiedliche Varianten des CAN-Busses zum Einsatz kommen können, wird hier der CAN-Antrieb-Bus erwähnt, der zur Vernetzung von Steuergeräten des Antriebstrangs wie Motorsteuergerät, Bremssteuergerät, Getriebesteuergerät, ESC-Steuergerät dient. Meist wird zu diesem Zweck die Highspeed-Variante des CAN-Busses nach ISO 11898-2 Spezifikation eingesetzt.

Fig. 2 zeigt jetzt die Hardwarearchitektur des Bremssteuersystems 100 gemäß der Erfindung. Die Erfindung beinhaltet eine standardisierbare Hardware-Schnittstelle für den Anschluss von 4 Standard- Raddrehzahlsensoren an zwei Steuergeräte sowie ein Verhaltensmodell, welches sicherstellt, dass auch nach Auftreten eines Einzelfehlers eines der beiden Steuergeräte die Daten aller Sensoren direkt empfangen kann und sie über den Fahrzeugbus dem anderen Steuergerät und weiteren Empfängern zur Verfügung stellen kann. So können beide Steuergeräte Rückfallebenen implementieren, die sich immer auf das Vorhandensein von Raddrehzahlinformationen stützen können.

Mit Bezugszahl 110 ist das Steuergerät des Primärbremssystems beziffert. Es handelt sich wie oben beschrieben um das ESP/ABS-Steuergerät. Mit Bezugszahl 130 ist das Steuergerät des Sekundärbremssystems bezeichnet. Es handelt sich um das Steuergerät des elektronischen Bremskraftverstärkers. Die 4 Raddrehzahlsensoren sind mit der Bezugszahl 120 versehen. Die Signalleitungen der Raddrehzahlsensoren 120 sind mit Bezugszahl 122 beziffert. Beide Steuergeräte 110 und 130 sind über einen Fahrzeug-Datenbus 140 kurz Fahrzeugbus miteinander vernetzt, über den Daten ausgetauscht werden können. An den Fahrzeugbus 140 können weitere Steuergeräte angeschlossen sein, wie Motorsteuergerät und Getriebesteuergerät (in der Zeichnung nicht dargestellt). Die Architektur der Steuergeräte ist in Fig. 2 ebenfalls dargestellt. Typischerweise beinhalten die Steuergeräte 110 und 130 je einen anwendungsspezifischen Schaltkreis ASIC 112 und 132, der für die Strom- / Spannungsversorgung der Raddrehzahlsensoren 120 und für die Erfassung und Verarbeitung der Signale der Raddrehzahlsensoren 120 zuständig ist. Die Steuergeräte 110 und 130 sind weiterhin mit je einem Mikrocontroller 114 und 134 ausgestattet. Der die eigentlichen Steuerfunktionen des Steuergerätes übernimmt. Zusätzlich ist in jedem Steuergerät noch je eine Überwachungsschaltung 118 und 138 vorgesehen. Solche Überwachungsschaltungen sind unter dem Begriff "Watchdog"-Schaltung bekannt. Damit wird der korrekte Programmablauf im Steuergerät überwacht. Verbindungen 111 und 131 zwischen den anwendungsspezifischen Schaltkreisen 112 und 132 und den Mikrocontrollern 114 und 134 sind vorhanden um beispielsweise die erfassten Sensordaten übertragen zu können.

Wie erwähnt, sind die Raddrehzahlsensoren 120 mit beiden Steuergeräten 110, 130 verbunden. Grundsätzlich kommen in den Steuergeräten herkömmliche Schaltungen zum Einsatz, welche die Sensorschnittstelle betreffen. Zwischen dem jeweiligen ASIC 112, 132 und den Raddrehzahlsensoren 120 wird aber im jeweiligen Steuergerät 110, 130 noch eine Sensorik-Trennschaltung 113, 133 eingefügt, welche die Verbindung zwischen den Raddrehzahlsensoren 120 und dem jeweiligen Steuergerät 110, 130 unterbrechen kann, sodass kein Strom mehr über die Schnittstelle fließen kann. So kann ein Raddrehzahlsensor 120 parallel an zwei Steuergeräte 110, 130 angeschlossen werden, weil sichergestellt ist, dass eines der beiden Steuergeräte 110, 130 die Verbindung unterbricht und sich der Sensorstrom somit nicht aufteilt.

Jedes Steuergerät 110, 130 muss die Sensorik-Trennschaltung 113, 133 steuern können und den jeweiligen Zustand über den Fahrzeugbus 140 kommunizieren können. Ein Ausfall eines Steuergeräts muss in jedem Fall dazu führen, dass die Sensorik-Trennschaltung die Verbindung des Steuergeräts 110, 130 zu den Raddrehzahlsensoren 120 unterbricht. Dies wird mit der erwähnten Watchdog-Schaltung erreicht. Eine Watchdog-Schaltung besteht im Wesentlichen aus einem Zähler, der an definierten Positionen im Programmablauf zurückgesetzt wird. Geschieht dies wegen eines Fehlers nicht, beispielsweise weil das Programm in eine Endlosschleife gerät, kommt es zum Zählerüberlauf und die Watchdog-Schaltung legt das Steuergerät lahm. Die Watchdog-Funktion in den aktuellen Bremssystemen legt das Steuergerät still sobald erkannt wurde, dass Aktorik oder Elektronik nicht mehr kontrolliert werden können und somit eine Destabilisierung des Fahrzeugs droht. Ist das Steuergerät nicht vollständig ausgefallen, kann der Status der Schnittstelle über den Fahrzeugbus 140 noch kommuniziert werden. Eine alternative Vorgehensweise bei dem Einsatz von Watchdog-Schaltungen ist, das im Fehlerfall das Steuergerät zurückgesetzt wird um zu testen ob der Fehler dadurch behoben werden kann.

Die Software der Steuergeräte 110, 130 ist so gestaltet sein, dass sie die Sensor-Schnittstelle immer nur dann aktiviert, wenn sichergestellt ist, dass die Sensor-Schnittstelle des anderen Steuergeräts 130, 110 deaktiviert ist. Dies geschieht über einen internen Zustandsautomaten, welcher die Zustände des jeweils anderen Zustandsautomaten über den Fahrzeugbus 140 empfängt. Die Software des Steuergerätes 110 des Primärbremssystems aktiviert seine Sensor-Schnittstelle standardmäßig und nur bei Auftreten bestimmter Fehler wird die Sensor-Schnittstelle deaktiviert. Die Software des Steuergerätes 130 des Sekundärbremssystems deaktiviert seine Sensor-Schnittstelle standardmäßig und aktiviert die Sensor-Schnittstelle unverzüglich, wenn ein Fehler im Primärbremssystem dazu geführt hat, dass dessen Sensor-Schnittstelle deaktiviert wurde.

Für die Systemumgebung ist es wegen der Sicherheitsanforderungen erforderlich, dass folgende Punkte eingehalten werden:
- Redundante Energieversorgung
   Jedes Steuergerät 110, 130 wird von einer unabhängigen Spannungsquelle mit Energie versorgt.
- Redundante Kommunikation
   Jedes Steuergerät 110, 130 kann über zwei voneinander unabhängige Kommunikationspfade mit dem jeweils anderen Steuergerät 130, 110 und bestimmten weiteren Steuergeräten im Fahrzeug kommunizieren.
- Fehlertolerante Fahrfunktion
   Der Ausfall eines Raddrehzahlsensors 120 führt nicht zum Ausfall der Fahrfunktion. Eine sichere Führung des Fahrzeuges ist auch mit 3 Raddrehzahlsensoren 120 möglich.

Zusätzlich ist ein Testmodus vorgesehen, der es erlaubt, die Fähigkeit der Steuergeräte 110, 130 zur Umschaltung der Sensor-Schnittstellen zu prüfen. So wird sichergestellt, dass die benötigte Redundanz der Bremssysteme vorhanden ist, bevor eine automatisierte Fahrfunktion vom Fahrer aktiviert wird.

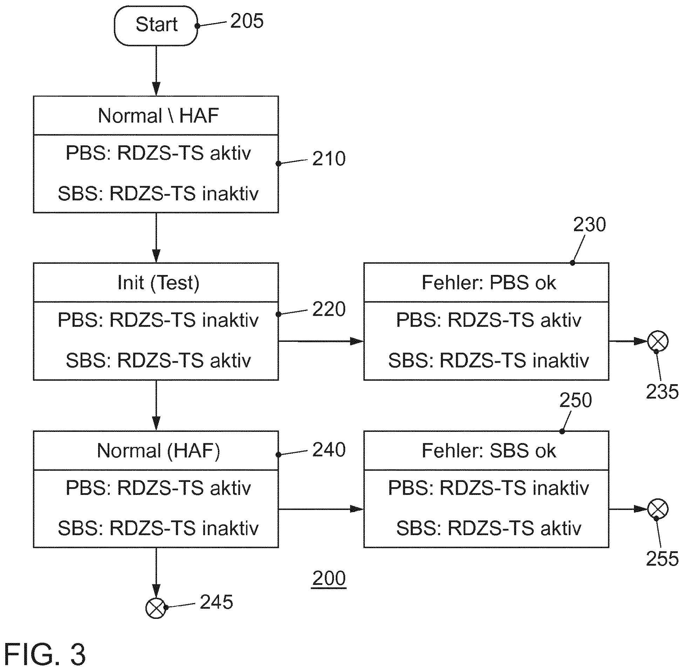

Fig. 3 zeigt ein Zustandsdiagramm für das Bremssystem mit einem Testmodus. Nach dem Fahrzeugstart im Schritt 205 geht die Software zunächst in den Zustand 210 "Normalbetrieb \ HAF" über. Darin findet kein hochautomatisiertes Fahren HAF statt. Das Steuergerät 110 des Primärbremssystems PBS stellt über die Schalteinheiten 113 in der Sensorik-Trennschaltung 116 die Verbindung zu den Raddrehzahlsensoren 120 her. Es werden die Sensorsignale vom Primärbremssystem über den CAN-Bus 140 gesendet. Das Steuergerät 130 des Sekundärbremssystems SBS trennt über die Schalteinheiten 133 in der Sensorik-Trennschaltung 136 die Verbindung zwischen Raddrehzahlsensoren 120 und dem Steuergerät 130 des Sekundärbremssystems. Das Steuergerät 130 des Sekundärbremssystems empfängt die Sensorsignale über den CAN-Bus 140.

Das System verbleibt so lange in dem Zustand 210 bis seitens des Fahrers über die entsprechende Benutzerschnittstelle die hochautomatisierte Fahrfunktion angefordert wird. Dazu ergeht eine HAF-Anforderung durch die Hauptfunktion an das Steuergerät 110 des Primärbremssystems. Danach wechselt das System in den Zustand 220 "Init (Test)", wo eine Initialisierung des Testmodus stattfindet. Der Testmodus läuft wie folgt ab: Das Steuergerät 110 des Primärbremssystems deaktiviert seine Sensor-Schnittstelle und signalisiert dem Steuergerät 130 des Sekundärbremssystems über den Fahrzeugbus 140 den Eintritt in den Testmodus. Das Steuergerät 110 des Primärbremssystems sendet in dem Zustand des Testmodus keine Daten der Raddrehzahlsensoren 120 an das Steuergerät 130 des SBS. Das Steuergerät 130 des Sekundärbremssystem empfängt das Signal über den Eintritt in den Testmodus und stellt die Verbindung zu den Raddrehzahlsensoren 120 mit den Schalteinheiten 133 der Sensorik-Trennschaltung 136 her. Zusätzlich beginnt es die ausgewerteten Daten der Raddrehzahlsensoren 120 über den Fahrzeugbus 140 zu dem Steuergerät 110 des Primärsteuergerätes zu senden. Das Steuergerät 110 empfängt die Daten der Raddrehzahlsensoren 120 über den CAN-Bus. Über den Fahrzeugbus 140 wird auch das Einleiten des Testmodus an das Steuergerät 110 des Primärsteuergerätes zurück gemeldet. Das Steuergerät 110 des Primärbremssystems prüft die empfangenen Daten und signalisiert bei positivem Ergebnis das Ende des Testmodus an das Steuergerät 130 des SBS. Die Ausgestaltung kann in einem alternativen Ausführungsbeispiel auch so sein, dass der Wechsel zum Zustand 220 Init (Test) schon vor der HAF-Anforderung seitens des Fahrers geschieht um die Reaktionszeit ggü. dem Fahrer zu verkürzen. Auch eine wiederkehrende, zyklische Prüfung wäre möglich. Die Erfindung ist aber auch für das "vollautomatische Fahren" ab dem VDA-Level 5 einsetzbar, das ohne Fahrer auskommt.

Das Steuergerät 130 des Sekundärbremssystems empfängt dieses Signal, geht in den Zustand 240 "Normalbetrieb (HAF bereit)" über und trennt darin die Verbindung zu den Raddrehzahlsensoren 120. Das Steuergerät 110 des Primärbremssystem bekommt nun keine Sensordaten mehr über den Fahrzeugbus 140 und stellt im Zustand 240 "Normalbetrieb (HAF bereit)" daraufhin die Verbindung zu den Raddrehzahlsensoren 120 her. Es sendet seinerseits die Daten der Raddrehzahlsensoren 120 über den Fahrzeugbus 140 zu dem Steuergerät 130 des Sekundärbremssystems. Wenn die Daten der Raddrehzahlsensoren 120 korrekt empfangen werden, ist das Primärbremssystem fertig initialisiert und wechselt auch in den Zustand 240 "Normal (HAF)". In dem Zustand ist es für die automatisierte Fahrfunktion bereit. Das Steuergerät 130 des Sekundärbremssystems empfängt ab jetzt die Sensordaten über den Fahrzeugbus 140 und ist auch initialisiert. Die HAF Bereitschaft wird an die Fahrzeug -Hauptfunktion zurück gemeldet, von der die Anforderung für das Einleiten des HAF-Betriebes kam. Die automatisierte Fahrfunktion wird dann wie vom Fahrer gewünscht eingeleitet. Dieser Zustand wird dann bis zum Ende des Fahrzyklus im Schritt 245 beibehalten, wenn kein Fehler auftritt.

In dem Zustand 220 "Init (Test)" werden laufend die Daten, die vom Steuergerät 130 des Sekundärbremssystems empfangen werden, überprüft. Wenn diese Daten nicht mehr korrekt empfangen werden, erfolgt ein Wechsel in den Zustand 230 "Fehler: PBS ok". Der Fehlerfall wird also durch Wechsel in den sicheren Zustand des Primärbremssystems abgefangen. Darin ist das Steuergerät 110 des Primärbremssystems mit den Raddrehzahlsensoren 120 verbunden und die Daten der Raddrehzahlsensoren werden über den Fahrzeugbus 140 an das Steuergerät 130 des Sekundärbremssystems gesendet. Das Steuergerät 130 des Sekundärbremssystems testet den Eingang der Daten von den Raddrehzahlsensoren. Werden auch diese nicht mehr korrekt empfangen, liegt ein schwer wiegender Fehler vor, für den keine Heilung möglich ist. Der Test wird im Schritt 235 mit entsprechendem Ergebnis beendet. Es kann keine automatisierte Fahrfunktion eingeleitet werden.

In dem Zustand 240 "Normal (HAF)" werden laufend die Daten, die vom Steuergerät 110 des Primärbremssystems empfangen werden, überprüft. Wenn diese Daten nicht mehr korrekt empfangen werden, erfolgt ein Wechsel in den Zustand 250 "Fehler: SBS ok". Der Fehlerfall wird also durch Wechsel in den sicheren Zustand des Sekundärbremssystems abgefangen. Darin ist das Steuergerät 130 des Sekundärbremssystems mit den Raddrehzahlsensoren 120 verbunden und die Daten der Raddrehzahlsensoren 120 werden über den Fahrzeugbus 140 an das Steuergerät 110 des Primärbremssystems gesendet. Das Steuergerät 110 des Primärbremssystems testet den Eingang der Daten von den Raddrehzahlsensoren 120. Werden auch diese nicht mehr korrekt empfangen, liegt ein schwer wiegender Fehler vor, für den keine Heilung möglich ist. Der Test wird im Schritt 255 mit entsprechendem Ergebnis beendet. Es kann keine automatisierte Fahrfunktion eingeleitet werden.

Alle hierin erwähnten Beispiele wie auch bedingte Formulierungen sind ohne Einschränkung auf solche speziell angeführten Beispiele zu verstehen. So wird es zum Beispiel von Fachleuten anerkannt, dass das hier dargestellte Blockdiagramm eine konzeptionelle Ansicht einer beispielhaften Schaltungsanordnung darstellt. In ähnlicher Weise ist zu erkennen, dass ein dargestelltes Flussdiagramm, Zustandsübergangsdiagramm, Pseudocode und dergleichen verschiedene Varianten zur Darstellung von Prozessen darstellen, die im Wesentlichen in computerlesbaren Medien gespeichert und somit von einem Computer oder Prozessor ausgeführt werden können.

Es sollte verstanden werden, dass das vorgeschlagene Verfahren und die zugehörigen Vorrichtungen in verschiedenen Formen von Hardware, Software, Firmware, Spezialprozessoren oder einer Kombination davon implementiert werden können. Spezialprozessoren können anwendungsspezifische integrierte Schaltungen (ASICs), Reduced Instruction Set Computer (RISC) und / oder Field Programmable Gate Arrays (FPGAs) umfassen. Vorzugsweise wird das vorgeschlagene Verfahren und die Vorrichtung als eine Kombination von Hardware und Software implementiert. Die Software wird vorzugsweise als ein Anwendungsprogramm auf einer Programmspeichervorrichtung installiert. Typischerweise handelt es sich um eine Maschine auf Basis einer Computerplattform die Hardware aufweist, wie beispielsweise eine oder mehrere Zentraleinheiten (CPU), einen Direktzugriffsspeicher (RAM) und eine oder mehrere Eingabe/Ausgabe (I/O) Schnittstelle(n). Auf der Computerplattform wird typischerweise außerdem ein Betriebssystem installiert. Die verschiedenen Prozesse und Funktionen, die hier beschrieben wurden, können Teil des Anwendungsprogramms sein, oder ein Teil der über das Betriebssystem ausgeführt wird.

Die Offenbarung ist nicht auf die hier beschriebenen Ausführungsbeispiele beschränkt.

### Bezugszeichenliste

- 100: Bremsvorrichtung
- 110: Primärsteuergerät
- 111: Datenbus Sekundärsteuergerät
- 112: Anwendungsspezifischer Schaltkreis Primärsteuergerät
- 113: Schalteinheit
- 114: Mikrocontroller
- 115: Steuerleitung
- 116: Sensorik-Trennschaltung Primärsteuergerät
- 118: Überwachungsschaltung
- 120: Raddrehzahlsensor
- 122: Sensor-Signalleitung
- 130: Sekundärsteuergerät
- 131: Datenbus Primärsteuergerät
- 132: Anwendungsspezifischer Schaltkreis Sekundärsteuergerät
- 133: Schalteinheit
- 134: Mikrocontroller
- 135: Steuerleitung
- 136: Sensorik-Trennschaltung Sekundärsteuergerät
- 138: Überwachungsschaltung
- 140: Kommunikationsbus
- 200: Zustandsdiagramm
- 210: Zustand Normalbetrieb ohne HAF Bereitschaft
- 220: Zustand Testmodus
- 230: Zustand Sicherer Betrieb über Primärsteuergerät
- 240: Zustand Normalbetrieb mit HAF Bereitschaft
- 250: Zustand Sicherer Betrieb über Sekundärsteuergerät

## Patentansprüche

1. Vorrichtung für die Steuerung eines sicherheitsrelevanten Vorgangs, wobei die Vorrichtung (100) redundant aufgebaut ist, mit einem Primärsteuergerät (110) und einem Sekundärsteuergerät (130), wobei das Sekundärsteuergerät (130) im Fehlerfall die Funktion des Primärsteuergerätes (110) übernimmt, wobei die Steuerung des sicherheitsrelevanten Vorganges basierend auf der Auswertung der Signale von wenigstens einem Sensor (120) geschieht, wobei ein Kommunikationsbus (140) vorhanden ist, der den Austausch von Daten zwischen Primär- und Sekundärsteuergerät ermöglicht, wobei der wenigstens eine Sensor (120) an das Primärsteuergerät (110) und an das Sekundärsteuergerät (130) anschließbar ist, **dadurch gekennzeichnet, dass** dem Primärsteuergerät (110) und dem Sekundärsteuergerät (130) jeweils eine eigene Sensorik-Trennschaltung (116, 136) zugeordnet ist, die bei Aktivierung das zugehörige Primär- oder Sekundärsteuergerät von dem wenigsten einen Sensor (120) trennt.

2. Vorrichtung nach Anspruch 1, wobei zur Überwachung der Funktion des Primärsteuergerätes (110) eine Überwachungsvorrichtung (118) vorgesehen ist.

3. Vorrichtung nach Anspruch 1 oder 2, wobei zur Überwachung der Funktion des Sekundärsteuergerätes (130) eine Überwachungsvorrichtung (138) vorgesehen ist.

4. Vorrichtung nach Anspruch 2 oder 3, wobei die Überwachungsvorrichtung (118, 138) eine Programmablauf-Überwachungsvorrichtung, insbesondere "Watchdog"-Vorrichtung, betrifft.

5. Vorrichtung nach einem der vorhergehenden Ansprüche, wobei die jeweilige Sensorik-Trennschaltung (116, 136) eine UND-Schaltung beinhaltet, die eine Anschaltung des wenigstens einen Sensors (120) an das jeweilige Primär- oder Sekundär-Steuergerät bewirkt, wenn von der Überwachungsvorrichtung (118, 138) ein Signal kommt, mit dem signalisiert wird, dass das jeweilige Steuergerät fehlerfrei arbeitet und von einem Mikrocontroller (114, 134) des jeweiligen Steuergerätes signalisiert wird, dass sich das jeweilige Steuergerät in einem Zustand befindet, in dem eine Verarbeitung und/oder Weiterleitung der Signale des wenigstens einen Sensors (120) an das jeweilige Sekundär- oder Primärsteuergerät vorgesehen ist.

6. Vorrichtung nach einem der vorhergehenden Ansprüche, wobei der sicherheitsrelevante Vorgang ein Bremsvorgang eines Kraftfahrzeuges ist und die Vorrichtung in einem Kraftfahrzeug eingebaut ist.

7. Vorrichtung nach Anspruch 6, wobei das Primärsteuergerät (110) ein Steuergerät für ein Primärbremssystems des Kraftfahrzeuges ist.

8. Vorrichtung nach Anspruch 6 oder 7, wobei das Sekundärsteuergerät (130) ein Steuergerät für ein Sekundärbremssystems des Kraftfahrzeuges ist.

9. Vorrichtung nach einem der Ansprüche 6 bis 8, wobei der wenigstens eine Sensor (120) ein Raddrehzahlsensor ist.

10. Verfahren zum Testen der Funktionsfähigkeit der Vorrichtung (100) nach einem der vorhergehenden Ansprüche, **dadurch gekennzeichnet, dass** das Primärsteuergerät (110) mit Hilfe der ihm zugeordneten eigenen Sensorik-Trennschaltung (116) eine Unterbrechung der Verbindung zu dem wenigstens einen Sensor (120) vornimmt, und über den Kommunikationsbus (140) dem Sekundärsteuergerät (130) den Eintritt in den Testmodus mitteilt, wobei das Sekundärsteuergerät (130) daraufhin mit Hilfe der ihm zugeordneten eigenen Sensorik-Trennschaltung (136) eine Anschaltung des wenigstens einen Sensors (120) an das Sekundärsteuergerät (130) vornimmt und die Sensordaten über den Kommunikationsbus (140) an das Primärsteuergerät (110) sendet, wobei das Primärsteuergerät (110) den korrekten Empfang der Sensordaten überprüft und bei positivem Ergebnis dem Sekundärsteuergerät (130) das Ende des Testmodus über den Kommunikationsbus (140) signalisiert.

11. Verfahren nach Anspruch 10, wobei das Sekundärsteuergerät (130) nach Eingang der Information bzgl. des Endes des Testmodus über die ihm zugeordnete Sensorik-Trennschaltung (136) eine Abschaltung des wenigstens einen Sensors (120) vornimmt, woraufhin das Primärsteuergerät (110) seinerseits aufgrund des Fehlens von übermittelten Sensordaten eine Anschaltung des wenigstens einen Sensors (120) an das Primärsteuergerät (110) über die ihm zugeordnete Sensorik-Trennschaltung (116) vornimmt und wie vor Einleitung des Testmodus die Lieferung von Sensordaten an das Sekundärsteuergerät (130) fortsetzt.

12. Verfahren nach einem der Ansprüche 10 oder 11, wobei die Durchführung des Tests der Funktionsfähigkeit der Vorrichtung (100) nach einer Anforderung zum Einleiten des Betriebsmodus eines hochautomatisierten Fahrens des Kraftfahrzeuges erfolgt.

13. Verfahren nach einem der Ansprüche 10 bis 12, wobei in dem Fall, dass das Primärsteuergerät (110) während des Tests erkennt, dass die Sensordaten nicht korrekt von dem Sekundärsteuergerät empfangen werden können, eine Anschaltung des wenigstens einen Sensors (120) an das Primärsteuergerät (110) über die ihm zugeordnete Sensorik-Trennschaltung (116) vornimmt und, wie zuvor, vor Einleitung des Testmodus die Lieferung von Sensordaten an das Sekundärsteuergerät (130) fortsetzt, wobei das Primärsteuergerät (110) den fehlerhaften Empfang der Sensordaten dem Sekundärsteuergerät (130) mitteilt und das Sekundärsteuergerät (130) daraufhin über die zugehörige Sensorik-Trennschaltung (136) die Abschaltung des wenigstens einen Sensors (120) vornimmt.

14. Kraftfahrzeug, **dadurch gekennzeichnet, dass** das Kraftfahrzeug eine Vorrichtung nach einem der Ansprüche 1 bis 9 aufweist.

## Claims

1. Device for the control of a safety-relevant process, wherein the device (100) is of a redundant design, with a primary control unit (110) and a secondary control unit (130), wherein the secondary control unit (130) carries out the function of the primary control unit (110) in the event of a fault, wherein the control of the safety-relevant process takes place based on the analysis of the signals of at least one sensor (120), wherein a communications bus (140) is provided that enables the exchange of data between the primary and secondary control units, wherein the at least one sensor (120) can be connected to the primary control unit (110) and to the secondary control unit (130), **characterized in that** a respective dedicated sensor arrangement isolation circuit (116, 136) is associated with the primary control unit (110) and the secondary control unit (130), which when activated isolates the associated primary or secondary control unit from the at least one sensor (120) .

2. Device according to Claim 1, wherein a monitoring device (118) is provided for monitoring the function of the primary control unit (110).

3. Device according to Claim 1 or 2, wherein a monitoring device (138) is provided for monitoring the function of the secondary control unit (130).

4. Device according to Claim 2 or 3, wherein the monitoring device (118, 138) relates to a program execution monitoring device, in particular a "watchdog" device.

5. Device according to any one of the preceding claims, wherein the respective sensor arrangement isolation circuit (116, 136) contains an AND circuit that brings about a connection of the at least one sensor (120) to the respective primary or secondary control unit if a signal arrives from the monitoring device (118, 138) that signals that the respective control unit is working faultlessly and a microcontroller (114, 134) of the respective control unit signals that the respective control unit is in a state in which there is processing and/or forwarding of the signals of the at least one sensor (120) to the respective secondary or primary control unit.

6. Device according to any one of the preceding claims, wherein the safety-relevant process is a braking process of a motor vehicle and the device is installed in a motor vehicle.

7. Device according to Claim 6, wherein the primary control unit (110) is a control unit for a primary brake system of the motor vehicle.

8. Device according to Claim 6 or 7, wherein the secondary control unit (130) is a control unit for a secondary brake system of the motor vehicle.

9. Device according to any one of Claims 6 to 8, wherein the at least one sensor (120) is a wheel revolution rate sensor.

10. Method for testing the operability of the device (100) according to any one of the preceding claims, **characterized in that** the primary control unit (110) breaks the connection to the at least one sensor (120) using the dedicated sensor arrangement isolation circuit (116) associated therewith, and notifies the secondary control unit (130) of entry into the test mode via the communications bus (140), wherein the secondary control unit (130) thereupon makes a connection of the at least one sensor (120) to the secondary control unit (130) using the dedicated sensor arrangement isolation circuit (136) associated therewith, and sends the sensor data via the communications bus (140) to the primary control unit (110), wherein the primary control unit (110) checks the correct reception of the sensor data and in the event of a positive result signals to the secondary control unit (130) the end of the test mode via the communications bus (140) .

11. Method according to Claim 10, wherein following input of the information about the end of the test mode, the secondary control unit (130) switches off the at least one sensor (120) by means of the sensor arrangement isolation circuit (136) associated therewith, whereupon because of the lack of transmitted sensor data, the primary control unit (110) for its part makes a connection of the at least one sensor (120) to the primary control unit (110) by means of the sensor arrangement isolation circuit (116) associated therewith and continues the supply of sensor data to the secondary control unit (130) as before the initiation of the test mode.

12. Method according to any one of Claims 10 or 11, wherein the performance of the test of the operability of the device (100) is carried out following a request to initiate the operating mode of highly automated driving of the motor vehicle.

13. Method according to any one of Claims 10 to 12, wherein in the event of the primary control unit (110) detecting during the test that the sensor data cannot be correctly received by the secondary control unit, a connection of the at least one sensor (120) to the primary control unit (110) is made by means of the sensor arrangement isolation circuit (116) associated therewith, and as previously, before the initiation of the test mode, the supply of sensor data to the secondary control unit (130) is continued, wherein the primary control unit (110) notifies the incorrect reception of the sensor data to the secondary control unit (130) and the secondary control unit (130) thereupon switches off the at least one sensor (120) by means of the associated sensor arrangement isolation circuit (136).

14. Motor vehicle, **characterized in that** the motor vehicle comprises a device according to any one of Claims 1 to 9.

## Revendications

1. Dispositif de commande d'un processus pertinent pour la sécurité, le dispositif (100) étant conçu de manière redondante avec une unité de commande primaire (110) et une unité de commande secondaire (130), l'unité de commande secondaire (130) prenant en charge la fonction de l'unité de commande primaire (110) en cas de défaillance, la commande du processus pertinent pour la sécurité étant effectuée sur la base de l'évaluation des signaux provenant d'au moins un capteur (120), un bus de communication (140) étant présent qui permet l'échange de données entre les unités de commande primaire et secondaire, l'au moins un capteur (120) pouvant être connecté à l'unité de commande primaire (110) et à l'unité de commande secondaire (130),
**caractérisé en ce que** l'unité de commande primaire (110) et l'unité de commande secondaire (130) sont chacune associée à leur propre circuit de séparation de capteurs (116, 136) qui, lorsqu'il est activé, sépare l'unité de commande primaire ou secondaire associée de l'au moins un capteur (120).

2. Dispositif selon la revendication 1, un dispositif de surveillance (118) étant prévu pour surveiller la fonction de l'unité de commande primaire (110).

3. Dispositif selon la revendication 1 ou 2, un dispositif de surveillance (138) étant prévu pour surveiller la fonction de l'unité de commande secondaire (130).

4. Dispositif selon la revendication 2 ou 3, le dispositif de surveillance (118, 138) concernant un dispositif de surveillance de déroulement de programme, en particulier un dispositif « chien de garde ».

5. Dispositif selon l'une des revendications précédentes, le circuit de séparation de capteurs respectif (116, 136) contenant un circuit ET qui effectue la connexion de l'au moins un capteur (120) à l'unité de commande primaire ou secondaire respective lorsqu'un signal provient du dispositif de surveillance (118, 138) et signale que l'unité de commande respective fonctionne sans défaillance et qu'un microcontrôleur (114, 134) de l'unité de commande respective signale que l'unité de commande respective se trouve dans un état dans lequel le traitement et/ou la transmission des signaux de l'au moins un capteur (120) à l'unité de commande secondaire ou primaire respective est prévue.

6. Dispositif selon l'une des revendications précédentes, le processus pertinent pour la sécurité étant un processus de freinage d'un véhicule automobile et le dispositif étant installé dans un véhicule automobile.

7. Dispositif selon la revendication 6, l'unité de commande primaire (110) étant une unité de commande d'un système de freinage primaire du véhicule automobile.

8. Dispositif selon la revendication 6 ou 7, l'unité de commande secondaire (130) étant une unité de commande d'un système de freinage secondaire du véhicule automobile.

9. Dispositif selon l'une des revendications 6 à 8, l'au moins un capteur (120) étant un capteur de vitesse de rotation de roue.

10. Procédé de test de la fonctionnalité du dispositif (100) selon l'une des revendications précédentes, **caractérisé en ce que** l'unité de commande primaire (110) interrompt la liaison à l'au moins un capteur (120) à l'aide de son propre circuit de séparation de capteurs (116) qui lui est associé et notifie à l'unité de commande secondaire (130) l'entrée en mode test par le biais du bus de communication (140), l'unité de commande secondaire (130) effectuant à l'aide de son propre circuit de séparation de capteurs (136) qui lui est associé la connexion de l'au moins un capteur (120) à l'unité de commande secondaire (130) et envoyant les données de capteur à l'unité de commande primaire (110) par le biais du bus de communication (140), l'unité de commande primaire (110) vérifiant la bonne réception des données de capteur et, en cas de résultat positif, signalant la fin du mode de test à l'unité de commande secondaire (130) par le biais du bus de communication (140) .

11. Procédé selon la revendication 10, l'unité de commande secondaire (130) effectuant la déconnexion de l'au moins un capteur (120) par le biais du circuit de séparation de capteurs (136) qui lui est associé après réception de l'information concernant la fin du mode de test, puis l'unité de commande primaire (110) effectuant de son côté, en raison du manque de données de capteur transmises, la connexion de l'au moins un capteur (120) à l'unité de commande primaire (110) par le biais du circuit de séparation de capteurs (116) qui lui est associé et poursuivant la transmission des données de capteur à l'unité de commande secondaire (130) comme avant le lancement du mode test.

12. Procédé selon l'une des revendications 10 ou 11, le test de la fonctionnalité du dispositif (100) étant effectué après une demande de lancement du mode de fonctionnement d'une conduite hautement automatisée du véhicule automobile.

13. Procédé selon l'une des revendications 10 à 12, dans le cas où l'unité de commande primaire (110) détecte pendant le test que les données de capteur ne peuvent pas être reçues correctement par l'unité de commande secondaire, la connexion de l'au moins un capteur (120) à l'unité de commande primaire (110) étant effectuée par le biais du circuit de séparation de capteurs qui lui est associé (116) et, comme auparavant, la transmission des données de capteur à l'unité de commande secondaire (130) se poursuivant comme avant le lancement du mode de test, l'unité de commande primaire (110) notifiant la mauvaise réception des données de capteur à l'unité de commande secondaire (130) puis l'unité de commande secondaire (130) effectuant la déconnexion de l'au moins un capteur (120) par le biais du circuit de séparation de capteurs associé (136).

14. Véhicule automobile, **caractérisé en ce que** le véhicule automobile comporte un dispositif selon l'une des revendications 1 à 9.
